(19) Europäisches Patentamt
European Patent Office
Office européen des brevets

(11) EP 4 212 755 A1

(12) **EUROPEAN PATENT APPLICATION**
published in accordance with Art. 153(4) EPC

(43) Date of publication:
**19.07.2023 Bulletin 2023/29**

(21) Application number: **21866581.8**

(22) Date of filing: **30.08.2021**

(51) International Patent Classification (IPC):
***F16D 57/00*** *(2006.01)* ***H01F 1/44*** *(2006.01)*

(52) Cooperative Patent Classification (CPC):
**F16D 57/00; H01F 1/44**

(86) International application number:
**PCT/JP2021/031676**

(87) International publication number:
**WO 2022/054622 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2020 JP 2020151456**

(71) Applicant: **FUJIFILM Corporation**
**Tokyo 106-8620 (JP)**

(72) Inventor: **SUZUKI, Ryota**
**Minamiashigara-shi, Kanagawa 250-0193 (JP)**

(74) Representative: **Klunker IP Patentanwälte PartG mbB**
**Destouchesstraße 68**
**80796 München (DE)**

# (54) MAGNETORHEOLOGICAL FLUID, METHOD FOR MANUFACTURING MAGNETORHEOLOGICAL FLUID, AND MAGNETORHEOLOGICAL FLUID DEVICE

(57) There are provided a magnetic viscous fluid containing magnetic particles, a carrier fluid, and an organic molybdenum compound, in which a content of the magnetic particles is 35% by volume or more and 50% by volume or less with respect to a volume of the magnetic viscous fluid, a viscosity of the carrier fluid, which is measured with an electromagnetic rotary viscometer at a measurement temperature of 25°C, is 10 mPa sec or more, and a shear viscosity of the magnetic viscous fluid, which is measured at a shear rate of 1,000 $sec^{-1}$ at a measurement temperature of 25°C, is 500 mPa sec or less, as well as a magnetic viscous fluid device including the magnetic viscous fluid and a production method for the magnetic viscous fluid. The production method for the magnetic viscous fluid includes subjecting a mixture containing the magnetic particles, the carrier fluid, and the organic molybdenum compound to resonance acoustic mixing.

## Description

## BACKGROUND OF THE INVENTION

1. Field of the Invention

The present invention relates to a magnetic viscous fluid, a production method therefor, and a magnetic viscous fluid device.

2. Description of the Related Art

A magnetic viscous fluid is also called an MR fluid (Magneto Rheological Fluid), which is a functional material expected to be useful in various use applications in recent years (see, for example, PTL1).

Citation List

Patent Literature

PLT1: JP2019-033222A

## SUMMARY OF THE INVENTION

The magnetic viscous fluid is a fluid that contains magnetic particles and a carrier fluid and has a property of changing the rheology by applying a magnetic field. The magnetic viscous fluid can exhibit large a yielding shear stress (hereinafter, also referred to as a "shear stress" or a "stress") in a case where a magnetic field is applied, as compared with a case where no magnetic field is applied. This is due to because, in a case where a magnetic field is applied, magnetic particles form clusters, which reduces the fluidity of the magnetic viscous fluid. In a case of utilizing this property, the operation of various devices can be controlled by applying a magnetic field. As an example, an operation control of a brake using a magnetic viscous fluid will be described. Such a brake is called a magneto rheological (MR) brake. The general structure of the MR brake is as follows. A disk that is rotatable in conjunction with an external shaft and a coil for generating a magnetic field is disposed in the inside of a brake, and a magnetic viscous fluid is further sealed therein. In a case where a magnetic field is applied to the magnetic viscous fluid by generating a magnetic field from the coil, clusters of magnetic particles are formed in the magnetic viscous fluid, perpendicular to the rotation direction of the disk. In a case where the disk is rotated in a state where clusters are formed, the clusters are cut by the disk, and a shear stress generated at this time is exhibited as a braking torque. For increasing an output of such an MR brake, it is desirable for the magnetic viscous fluid to be capable of exhibiting a high stress in a case where a magnetic field is applied.

In addition, it is also desired that in the brake, the drag torque, that is, the torque in the absence of the magnetic field is small. This is due to because in a case where the drag torque is large, a large torque is generated even after the brake is released, which causes an increase in heat generation and/or an increase in energy consumption.

In addition, the brake is required to continue to stably exhibit braking performance even in a case of being repeatedly used. For that purpose, it is desired that the magnetic viscous fluid has little deterioration in performance (that is, has excellent in durability) even in a case where a magnetic field is repeatedly applied.

The above-described points apply not only to the MR brake but also to various devices using a magnetic viscous fluid.

In consideration of the above circumstances, one aspect of the present invention is to provide a magnetic viscous fluid that can contribute to increasing the output of a magnetic viscous fluid device and a low torque in a case of no magnetic field and has excellent durability.

One aspect of the present invention relates to

a magnetic viscous fluid comprising;
magnetic particles,
a carrier fluid, and
an organic molybdenum compound,
in which a content of the magnetic particles is 35% by volume or more and 50% by volume or less with respect to a volume of the magnetic viscous fluid,
a viscosity of the carrier fluid, which is measured with an electromagnetic rotary viscometer at a measurement temperature of 25°C, is 10 mPa·sec (millipascal seconds) or more, and
a shear viscosity of the magnetic viscous fluid, which is measured at a shear rate of 1,000 $sec^{-1}$ at a measurement

temperature of 25°C, is 500 mPa sec or less.

In one form, in the magnetic viscous fluid, the content of the magnetic particles can be 40% by volume or more and 50% by volume or less with respect to the volume of the magnetic viscous fluid.
In one form, the organic molybdenum compound can be molybdenum dithiocarbamate.
In one form, the magnetic viscous fluid can further contain an organic zinc compound.
In one form, the organic zinc compound can be zinc dialkyldithiophosphate.
In one form, in the magnetic viscous fluid, the content of the organic zinc compound can be 3.0% by mass or more with respect to the mass of the magnetic viscous fluid excluding the mass of the magnetic particles.
In one form, the magnetic viscous fluid can further contain a phenol-based compound and a sulfur-based compound.
In one form, the phenol-based compound can be a hindered phenol-based compound.
In one form, the sulfur-based compound can be a thioether-based compound.
In one form, in the magnetic viscous fluid, a total content of the phenol-based compound and the sulfur-based compound can be 0.1% by mass or more and 3.0% by mass or less with respect to a mass of the magnetic viscous fluid excluding a mass of the magnetic particles.
In one form, the magnetic viscous fluid can further contain acrylic silicone.
In one form, the carrier fluid can be a silicone-based fluid.
In one form, the shear viscosity of the magnetic viscous fluid can be 50 mPa·sec or more and 500 mPa·sec or less.
In one form, the viscosity of the carrier fluid can be 10 mPa·sec or more and 35 mPa·sec or less.
One aspect of the present invention relates to a magnetic viscous fluid device including the magnetic viscous fluid. In the present invention and the present specification, the "magnetic viscous fluid device" shall refer to a device including a portion that contains a magnetic viscous fluid.
One aspect of the present invention relates to a production method for the magnetic viscous fluid, where the production method includes subjecting a mixture containing the magnetic particles, the carrier fluid, and the organic molybdenum compound to resonance acoustic mixing.
According to one aspect of the present invention, it is possible to provide a magnetic viscous fluid that can contribute to increasing the output of a device that utilizes the magnetic viscous fluid and a low torque in a case of no magnetic field and has excellent durability and provide a production method therefor. In addition, according to one aspect of the present invention, it is possible to provide a magnetic viscous fluid device including such a magnetic viscous fluid.

## DESCRIPTION OF THE PREFERRED EMBODIMENTS

[Magnetic viscous fluid]

One aspect of the present invention relates to a magnetic viscous fluid. The magnetic viscous fluid contains magnetic particles, a carrier fluid, and an organic molybdenum compound. The content of the magnetic particles is 35% by volume or more and 50% by volume or less with respect to the volume of the magnetic viscous fluid. The viscosity of the carrier fluid, which is measured with an electromagnetic rotary viscometer at a measurement temperature of 25°C, is 10 mPa·sec or more, and the shear viscosity of the magnetic viscous fluid, which is measured at a shear rate of 1,000 $sec^{-1}$ at a measurement temperature of 25°C, is 500 mPa·sec or less.
The inventors of the present invention conceived that during the repeated studies, a highly viscous carrier fluid having the above-described viscosity should be contained, and furthermore, the viscosity as that of the magnetic viscous fluid (more specifically, the shear viscosity) should be reduced and a result of further studies found a magnetic viscous fluid that can contribute to increasing the output of a magnetic viscous fluid device and reducing the torque in a case where no magnetic field is applied and is capable of exhibiting excellent durability. According to the inventors of the present invention, it is presumed as follows regarding the magnetic viscous fluid. However, the present invention is not limited to the presumption described in the present specification.
The fact that the shear viscosity of the magnetic viscous fluid is 500 mPa·sec or less can contribute to reducing the torque of the magnetic viscous fluid device in a case where no magnetic field is applied.
In the magnetic viscous fluid, the fact that the content of the magnetic particles with respect to the volume of the magnetic viscous fluid is 35% by volume or more can contribute to increasing the output of the magnetic viscous fluid device. In addition, the fact that the content of the magnetic viscous fluid of 50% by volume or less can contribute to decreasing the viscosity of the magnetic viscous fluid.
The fact that the magnetic viscous fluid contains an organic molybdenum compound and that the viscosity of the carrier fluid contained in the magnetic viscous fluid is 10 mPa sec or more can contribute to the improvement of the durability of the magnetic viscous fluid.

<Shear viscosity of magnetic viscous fluid>

The shear viscosity of the magnetic viscous fluid, which is measured at a shear rate of 1,000 $sec^{-1}$ at a measurement temperature of 25°C, is 500 mPa·sec or less. In the present invention and the present specification, the shear viscosity of the magnetic viscous fluid is measured according to the following method.

As the viscometer, a coaxial rotational viscometer of the outer cylinder constant speed type is used. Specific examples of the viscometer that can be used include a coaxial rotational rheometer ONRH-1 type manufactured by OhnaTech Inc.). For example, it is possible to use G2B-145 manufactured by OhnaTech Inc. as the inner cylinder, and it is possible to use Small-175 manufactured by OhnaTech Inc. as the outer cylinder. Regarding the measurement temperature, a temperature control means or the like included in the viscometer is used to carry out temperature control, and after confirming that a reading value of a thermometer (for example, a platinum thermometer) installed in the inner cylinder is in a range of 25°C ± 1.0°C, the measurement is started. Using a viscometer, the viscosity measurement is carried out at a shear rate of 0.464 $sec^{-1}$, the shear rate is sequentially increased in ten steps from 0.464 $sec^{-1}$ to 1,000 $sec^{-1}$, and the viscosity measurement is carried out in a state where the increased shear rate after the shear rate increases in each step, where this viscosity measurement is repeated a total of 4 times. In the shear rate increase in the n-th step, the shear rate is set to a value obtained by multiplying 0.464 $sec^{-1}$ by $10^{1/3}$ (= 2.1527...) n times. The shear rate of 1,000 $sec^{-1}$ at the shear rate increase in the final step (n = 10) is a value obtained by multiplying 0.464 $sec^{-1}$ by $10^{1/3}$ (= 2.1527...) 10 times. The viscosity measurement is carried out at a shear rate of 0.464 $sec^{-1}$ and a shear rate after the shear rate increase in each of the ten steps. As a result, in the four times of repetitions, the total number of measurements in each repetition is 11. In the viscosity measurement at the shear rate in each of the eleven measurements, a viscosity in a steady state is measured. The steady state shall refer to a state where the value of the viscosity displayed on the viscometer has become a constant value. In the present invention and the present specification, the viscosity measured at a shear rate of 1,000 $sec^{-1}$ after the shear rate increase in the final step (n = 10) in the fourth shear rate increase shall be the shear viscosity of the magnetic viscous fluid as a measurement target at a shear rate of 1,000 $sec^{-1}$ at a measurement temperature of 25°C. Hereinafter, such a shear viscosity is also simply described as a "shear viscosity".

From the viewpoint of reducing the torque of the magnetic viscous fluid device in a case where no magnetic field is applied, the shear viscosity of the magnetic viscous fluid is 500 mPa·sec or less. The inventors of the present invention conceive as follows regarding the reason why the reduction of the shear viscosity of the magnetic viscous fluid contributes to reducing the torque of the magnetic viscous fluid device.

In a magnetic viscous fluid device, a disk-shaped or cylindrical rotor is often used. The torque in a case where no magnetic field is applied can be determined by calculation from the rotor radius r, the rotor surface area S, and the stress $\sigma$. The stress $\sigma$ is a value depending on the physical properties of the magnetic viscous fluid and can be determined from the shear rate $\gamma$ and the shear viscosity $\eta$ according to the following expression.

$$\sigma\ (\text{Pa}) = \eta\ (\text{Pa·sec}) \times \gamma\ (\text{sec}^{-1})$$

In a magnetic viscous fluid device, a gap between a rotor and a magnetic pole is often about several hundred μm, and a shear rate is often several hundred to several thousand $sec^{-1}$. The magnetic viscous fluid generally has thixotropic properties, and the shear viscosity changes depending on the shear rate.

Regarding the above points, since the shear viscosity of the magnetic viscous fluid in the present invention and the present specification are each a measured value at a shear rate of 1000 $sec^{-1}$, they can be said to correspond to a stress that can be generated in the magnetic viscous fluid device. The inventors of the present invention conceive that a case where such a shear viscosity is a low viscosity of 500 mPa·sec or less leads to the reduction of the stress $\sigma$, which contributes to capable of reducing the torque in a case where no magnetic field is applied.

The shear viscosity of the magnetic viscous fluid is 500 mPa sec or less, preferably 450 mPa·sec or less, more preferably 400 mPa·sec or less, still more preferably 350 mPa·sec or less, still more preferably 300 mPa·sec or less, more preferably, and even still more preferably 250 mPa·sec or less. In addition, the shear viscosity of the magnetic viscous fluid can be, for example, 50 mPa sec or more or 100 mPa sec or more. From the viewpoint of reducing the torque of the magnetic viscous fluid device in a case where no magnetic field is applied, it is preferable that the shear viscosity of the magnetic viscous fluid is low, and thus the shear viscosity of the magnetic viscous fluid may be lower than the values exemplified above. Regarding the shear viscosity of the magnetic viscous fluid, the higher the content of the magnetic particles in the magnetic viscous fluid is, the larger the value of the shear viscosity tends to be.

<Viscosity of carrier fluid>

The viscosity of the carrier fluid contained in the magnetic viscous fluid is 10 mPa·sec or more. In the present invention and the present specification, the "carrier fluid" refers to a liquid fluid, where the viscosity of the carrier fluid is

measured according to the following method.

A magnetic viscous fluid is allowed to stand naturally, or the magnetic viscous fluid (including ultracentrifugation) is centrifuged to sediment magnetic particles, and then the supernatant is collected from the magnetic viscous fluid with a pipetter or the like, whereby it is possible to obtain a carrier fluid to be used as a sample for measuring the viscosity.

As the viscometer, an electromagnetic rotary viscometer is used. The electromagnetic rotary viscometer is also generally referred to as an electro-magnetically spinning (EMS) viscometer. Specific examples of the electromagnetic rotary viscometer include an EMS viscometer EMS-1000 manufactured by KYOTO ELECTRONICS MANUFACTURING Co., Ltd. A spherical probe having a diameter of 2.0 mm is used as the probe, the motor rotation speed is set to 1,000 revolutions per minute (rpm), the setting measurement time is set to the shortest time in the specifications of an electromagnetic rotary viscometer to be used (for example, a measurement mode "fastest" is selected in a case of an EMS viscometer EMS-1000, manufactured by KYOTO ELECTRONICS MANUFACTURING Co., Ltd.), the setting temperature of a sample temperature of the viscometer is set to 25°C in a state where the probe is rotated, and the measurement is started 5 minutes later after the sample temperature reaches 25°C, where the measurement is carried out 3 times. The arithmetic average of the values obtained in the three times of measurements is defined as the viscosity of the carrier fluid as a measurement target.

From the viewpoint of improving the durability of the magnetic viscous fluid, the viscosity of the carrier fluid contained in the magnetic viscous fluid is 10 mPa sec or more, preferably 12 mPa·sec or more, more preferably 14 mPa or more, and still more preferably 18 mPa or more. In addition, the viscosity of the carrier fluid can be, for example, 35 mPa·sec or less, 30 mPa sec or less, or 25 mPa or less. From the viewpoint of improving the durability of the magnetic viscous fluid, it is preferable that the viscosity of the carrier fluid is high, and thus the viscosity of the carrier fluid contained in the magnetic viscous fluid may exceed the values exemplified above.

Hereinafter, the magnetic viscous fluid will be described in more detail.

<Magnetic particles>

The magnetic viscous fluid contains magnetic particles at a content of 35% by volume or more and 50% by volume or less in terms of the content of the magnetic viscous fluid with respect to the volume. In the present invention and the present specification, the content of the magnetic particles in the magnetic viscous fluid is a value calculated by setting the total volume of the magnetic viscous fluid to 100% by volume. In addition, the magnetic viscous fluid may contain only one kind of magnetic particles or may contain two or more kinds of magnetic particles. In a case where two or more kinds of magnetic particles are contained, the content thereof is the total content of the two or more kinds of magnetic particles. In the magnetic viscous fluid, the fact that the content of the magnetic particles is 35% by volume or more can contribute to increasing the output of the magnetic viscous fluid device. From the viewpoint of further increasing the output of the magnetic viscous fluid device, the content of the magnetic particles is preferably 37% by volume or more, more preferably 40% by volume or more, still more preferably 42% by volume or more, and even still more preferably 45% by volume or more. On the other hand, the fact that the content of the magnetic particles is low in the magnetic viscous fluid can contribute to reducing the shear viscosity of the magnetic viscous fluid. From this point, the content of the magnetic particles in the magnetic viscous fluid is 50% by volume or less, preferably 48% by volume or less, more preferably 45% by volume or less, and still more preferably 43% by volume or less.

The content (unit: % by volume) of the magnetic particles in the magnetic viscous fluid according to the description of the present invention and the present specification shall be a value determined according to the following method.

A magnetic viscous fluid having a volume of Vtotal and a mass of Wtotal is allowed to stand naturally, or the magnetic viscous fluid is centrifuged (including ultracentrifugation) to be separated into a solid content and a liquid component. The volume of the separated solid content is denoted by Vm, and the volume of the separated liquid component is denoted by Vl. The mass of the separated solid content is denoted by Wm, and the mass of the separated liquid component is denoted by Wl. Each of Vtotal, Vm, and Vl are determined according to a known volume measuring method. Each of Wtotal, Wm, and Wl is determined according to a known mass measuring method. The solid content includes magnetic particles. Even in a case where the adsorption components are adsorbed on the magnetic particles separated as the solid content, the influence of the adsorption components on the measured values of the volume, the mass, and the true density described below is generally negligible and thus can be ignored. As a result, the Vm shall be regarded as the volume of the magnetic particles, and the Wm is regarded as the mass of the magnetic particles. The relationship of Expression (1) is established among Vm, Vl, and Vtotal. The relationship of Expression (2) is established among Wm, Wl, and Wtotal.

$$\mathrm{Vm} + \mathrm{Vl} = \mathrm{Vtotal} \cdots (1)$$

$$Wm + Wl = Wtotal \cdots (2)$$

In a case of dividing Expression (1) by Vtotal, Expression (3) is obtained.

$$Vm/Vtotal + Vl/Vtotal = 1 \cdots (3)$$

Here, assuming that Cm = Vm/Vtotal, Expression (4) is obtained from Expression (3).

$$Vl/Vtotal = (1 - Cm) \cdots (4)$$

In addition, the true density of the magnetic viscous fluid is denoted by dtotal, the true density of the solid content separated as above is denoted by dm, and the true density of the liquid component separated as above is denoted by dl. Then, the following relationships are established:

$$Wm \text{ (unit: kg)} = Vm \text{ (unit: } m^3\text{)} \times dm \text{ (unit: kg/}m^3\text{)}$$

$$Wl \text{ (unit: kg)} = Vl \text{ (unit: } m^3\text{)} \times dl \text{ (unit: kg/}m^3\text{)}$$

$$Wtotal \text{ (unit: kg)} = Vtotal \text{ (unit: } m^3\text{)} \times dtotal \text{ (unit: kg/}m^3\text{)}$$

As a result, from these relationships, Expression (2) can be rewritten as Expression (2A).

$$Vm \times dm + Vl \times dl = Vtotal \times dtotal \cdots (2A)$$

In a case of dividing Expression (2A) by Vtotal, Expression (5) is obtained.

$$(Vm/Vtotal) \times dm + (Vl/Vtotal) \times dl = dtotal \cdots (5)$$

From Expression (5) and Expression (4), Expression (6) is obtained.

$$Cm \times dm + (1 - Cm) \times dl = dtotal \cdots (6)$$

In a case of rearranging Expression (6) with respect to Cm, Expression (7) is obtained.

$$Cm = (dtotal - dl)/(dm - dl) \cdots (7)$$

Cm can be calculated from Expression (7) and the above-described various true densities. The true density dm of the solid content can be obtained according to a known method such as a liquid phase substitution method and a gas phase substitution method. In Examples described later, it is determined by a gas phase substitution method according to JIS Z8807: 2012. The true density dtotal of the magnetic viscous fluid and the true density dl of the liquid component can be determined according to a pycnometer method according to JIS K5600-2-4:2014, and in Examples described later, it is determined according to such a method. Using the values of the various true densities obtained in this way, "Cm" is calculated according to Expression (7). The content (unit: % by volume) of the magnetic particles in the magnetic viscous fluid is determined as the "calculated Cm × 100".

Examples of the magnetic particles include particles of a magnetic material classified into a normal magnetic, ultra-normal magnetic, or ferromagnetic material, and various magnetic particles that are generally used for a magnetic viscous fluid can be used. Specific examples thereof include metal particles containing one or more selected from iron, cobalt, and nickel, and metal compound particles containing one or more selected from iron nitride, iron carbide, carbonyl

iron, ferrite, and magnetite. The above-described metal particles can be particles containing a metal component containing one or more selected from iron, cobalt, and nickel, and it can be more specifically particles containing, as a metal component, a metal single body selected from iron, cobalt, and nickel, or an alloy having one or more metal components selected from iron, cobalt, and nickel as constitutional components. The particles containing an alloy may contain a metal component other than iron, cobalt, and nickel, as a constitutional component of the alloy. In this case, it is preferable that one or more selected from iron, cobalt, and nickel are the main components. In addition, it is preferable that the metal compound particles contain, as a main component, one or more selected from iron nitride, iron carbide, carbonyl iron, ferrite, and magnetite. Here, the "main component" means a component having the largest mass proportion among the components constituting the magnetic particles. The magnetic particles may be composed of only the main component.

Among the above-described magnetic particles, magnetic particles containing iron are preferable, and metal compound particles generally called carbonyl iron are more preferable. The carbonyl iron is generally produced by thermal decomposition of iron pentacarbonyl. For example, a commercially available carbonyl iron powder may be used as magnetic particles to prepare the magnetic viscous fluid. Examples of the commercially available product thereof include a carbonyl iron powder commercially available from BASF SE. However, the examples thereof are not limited to this, and commercially available magnetic particles or magnetic particles prepared by a known method can be used.

The magnetic particles contained in the magnetic viscous fluid may be magnetic particles which have been subjected to surface coating with a silane coupling agent or the like or may be magnetic particles which have not been subjected to surface coating.

The average particle diameter of the magnetic particles is preferably 0.05 to 50 μm, more preferably 0.05 to 40 μm, and still more preferably 0.1 to 30 μm, from the viewpoint of providing a magnetic viscous fluid that is capable of satisfactorily exhibiting a property of changing the rheology by applying a magnetic field. The average particle diameter of the above-described magnetic particles is an average particle diameter measured according to a laser diffraction scattering method according to JIS Z8825: 2013.

<Carrier fluid>

As the carrier fluid, various liquid fluids that are generally used for a magnetic viscous fluid can be used. Specific examples thereof include a natural fatty oil, a mineral oil, a polyphenyl ether, a dibasic acid ester, a neopentyl polyol ester, a phosphoric acid ester, synthetic cycloparaffin and synthetic paraffin, a synthetic unsaturated hydrocarbon oil, a monobasic acid ester, a glycol ester, a glycol ester, a silicic acid ester, a silicone oil, a silicone copolymer, a synthetic hydrocarbon, and a mixtures of two or more thereof. In addition, liquid paraffin called white oil, or a liquid fluid commercially available as hydraulic oil or transformer oil can also be used. The carrier fluid is preferably a silicone-based fluid. The "silicone-based fluid" is a liquid fluid containing an organic silicon compound having a siloxane bond (Si-O-Si), and for example, a commercially available silicone oil can be used. Examples of the commercially available product thereof include a silicone oil manufactured by Shin-Etsu Chemical Co., Ltd. However, the examples thereof are not limited to this, and a commercially available liquid fluid having a viscosity in the range described above can be selected and used, or a liquid fluid prepared by a known method can also be used.

From the viewpoint of reducing the shear viscosity of the magnetic viscous fluid, the content of the carrier fluid in the magnetic viscous fluid is preferably 50% by volume or more and more preferably 52% by volume or more in terms of the content with respect to the volume of the magnetic viscous fluid (that is, with respect to 100% by volume of the total volume of the magnetic viscous fluid). In addition, from the viewpoint of further increasing the output of the magnetic viscous fluid device, the content of the carrier fluid is preferably 60% by volume or less and more preferably 58% by volume or less. In addition, there is a case where only one kind of a certain component is contained in the magnetic viscous fluid, and there is a case where two or more kinds thereof are contained. The content in a case where two or more kinds thereof are contained is the total content of the two or more kinds thereof.

<Organic molybdenum compound>

The magnetic viscous fluid contains an organic molybdenum compound. The organic molybdenum compound is an organic compound containing molybdenum (Mo). The organic molybdenum compound is conceived to contribute to suppressing the deterioration of the magnetic characteristics of the magnetic particles and/or suppressing the deterioration of the carrier fluid, and this is presumed to lead to the improvement of the durability of the magnetic viscous fluid. Examples of the preferred organic molybdenum compound include an organic molybdenum compound containing sulfur (S). It is presumed that an organic molybdenum compound containing sulfur is partially reduced to be molybdenum disulfide ($MoS_2$) at the time of the preparation of the magnetic viscous fluid, and this is conceived to be preferable for reducing the viscosity of the magnetic viscous fluid according to the inventors of the present invention.

Specific examples of the sulfur-containing organic molybdenum compound include molybdenum dithiocarbamate (MoDTC), molybdenum dithiophosphate (MoDTP), a complex between a molybdenum compound and a sulfur-containing organic compound or between a molybdenum compound and another organic compound other than the sulfur-containing organic compound, and a complex between a sulfur-containing molybdenum compound such as molybdenum sulfide or molybdenum sulfide acid and an alkenyl succinimide. Examples of the molybdenum compound include molybdenum oxides such as molybdenum dioxide and molybdenum trioxide, molybdic acids such as orthomolydic acid, paramolybdic, acid and molybdenum (poly)sulfide acid, molybdic acid salts such as metal salts of these molybdic acids and an ammonium salt, molybdenum sulfides molybdenum disulfide, molybdenum trisulfide, molybdenum pentaulfide, and molybdenum polysulfide, molybdenum sulfide acid, a metal salt or amine salt of molybdenum sulfide acid, and molybdenum halides such as molybdenum chloride. Examples of the sulfur-containing organic compound include an alkyl (thio)xanthate, thiadiazole, mercaptothiathiazole, a thiocarbonate, tetrahydrocarbylthiuram disulfide, bis(di(thio)hydrocarbyldithiophosphonate)disulfide, an organic (poly)sulfide, and a sulfide ester.

Preferred specific examples of the organic molybdenum compound containing sulfur include molybdenum dithiocarbamate (MoDTC). The molybdenum dithiocarbamate can be a compound represented by General Formula 1 below.

General Formula 1

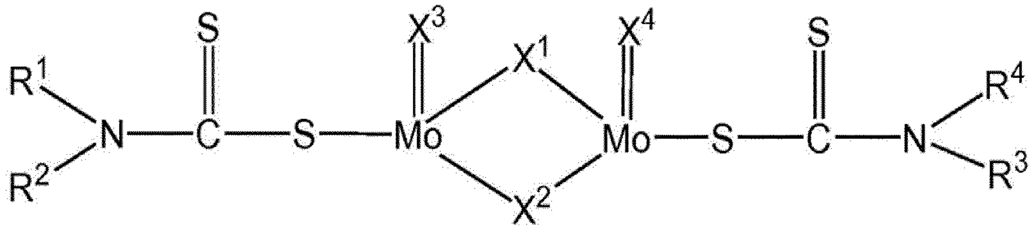

(In General Formula 1, $R^1$ to $R^4$ each independently represent a hydrocarbon group, and $X^1$ to $X^4$ each independently represent a sulfur atom or an oxygen atom.)

In Formula 1, $R^1$ to $R^4$ each independently represent a hydrocarbon group. The number of carbon atoms of the hydrocarbon group is preferably in a range of 4 to 18, more preferably in a range of 6 to 15, and still more preferably in a range of 8 to 13. Unless otherwise specified in the present invention and the present specification, a described group may have a substituent or may be unsubstituted. In a case where a certain group has a substituent, examples of the substituent include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, or a bromine atom), a cyano group, an amino group, a nitro group, an acyl group, and a carboxy group. Regarding a group having a substituent, the "number of carbon atoms" means the number of carbon atoms, which includes those of the substituent.

Specific examples of the hydrocarbon group include saturated aliphatic hydrocarbon groups such as an n (normal)-butyl group, an isobutyl group, a secondary butyl group, a tertiary butyl group, an n-pentyl group, a branched pentyl group, a secondary pentyl group, a tertiary pentyl group, an n-hexyl group, a branched hexyl group, a secondary hexyl group, a tertiary hexyl group, an n-heptyl group, a branched heptyl group, a secondary heptyl group, a tertiary heptyl group, an n-octyl group, a 2-ethylhexyl group, a branched octyl group, a secondary octyl group, a tertiary octyl group, an n-nonyl group, a branched nonyl group, a secondary nonyl group, a tertiary nonyl group, an n-decyl group, a branched decyl group, a secondary decyl group, a tertiary decyl group, an n-undecyl group, a branched undecyl group, a secondary undecyl group, a tertiary undecyl group, an n-dodecyl group, a branched dodecyl group, a secondary dodecyl group, a tertiary dodecyl group, an n-tridecyl group, a branched tridecyl group, a secondary tridecyl group, a tertiary tridecyl group, an n-tetradecyl group, a branched tetradecyl group, a secondary tetradecyl group, a tertiary tetradecyl group, an n-pentadecyl group, a branched pentadecyl group, a secondary pentadecyl group, a tertiary pentadecyl group, an n-hexadecyl group, a branched hexadecyl group, a secondary hexadecyl group, a tertiary hexadecyl group, an n-heptadecyl group, a branched heptadecyl group, a secondary heptadecyl group, a tertiary heptadecyl group, an n-octadecyl group, a branched octadecyl group, a secondary octadecyl group, and a tertiary octadecyl group; unsaturated aliphatic hydrocarbon groups such as a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, a 5-hexenyl group, a 1-heptenyl group, a 6-heptenyl group, a 1-octenyl group, a 7-octenyl group, a 8-nonenyl group, a 1-decenyl group, a 9-decenyl group, a 10-undecenyl group, a 1-dodecenyl group, a 4-dodecenyl

group, a 11-dodecenyl group, a 12-tridecenyl group, a 13-tetradecenyl group, a 14-pentadecenyl group, a 15-hexadecenyl group, a 16-heptadecenyl group, a 1-octadecenyl group, and a 17-octadecenyl group; aromatic hydrocarbon groups such as a phenyl group, a toluyl group, a xylyl group, a cumenyl group, a mesityl group, a benzyl group, a phenethyl group, a styryl group, a cinnamyl group, a benzhydryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, a dodecylphenyl group, a styrylated phenyl group, a p (para)-cumylphenyl group, a phenylphenyl group, a benzylphenyl group, an α-naphthyl group, and a β-naphthyl group; alicyclic hydrocarbon groups such as a cyclopropyl group, a cyclobutyl group, a cyclopentyl group, a cyclohexyl group, a cycloheptyl group, a cyclooctyl group, a methylcyclopentyl group, a methylcyclohexyl group, a methylcycloheptyl group, a methylcyclooctyl group, a 4,4,6,6-tetramethylcyclohexylcyclohexyl group, a 1,3-dibutylcyclohexyl group, a norbornyl group, a bicyclo[2.2.2]octyl group, an adamantyl group, a 1-cyclobutenyl group, a 1-cyclopentenyl group, a 3-cyclopentenyl group, a 1-cyclohexenyl group, a 3-cyclohexenyl group, a 3-cycloheptenyl group, a 4-cyclooctenyl group, a 2-methyl-3-cyclohexenyl group, and a 3,4-dimethyl-3-cyclohexenyl group. In General Formula 1, $R^1$ to $R^4$ may be the same or different from each other. $R^1$ to $R^4$ are each independently preferably a saturated aliphatic hydrocarbon group or an unsaturated aliphatic hydrocarbon group, and more preferably a saturated aliphatic hydrocarbon group.

$X^1$ to $X^4$ each independently represent a sulfur atom or an oxygen atom. It is preferable that $X^1$ and $X^2$ are a sulfur atom, and it is more preferable that $X^1$ and $X^2$ are a sulfur atom and $X^3$ and $X^4$ are an oxygen atom.

As the organic molybdenum compound, a commercially available product can be used, or a compound prepared by a known method can also be used. Examples of the commercially available product thereof include the ADEKA SAKURA-LUBE series manufactured by ADEKA Corporation. However, the examples thereof are not limited to this.

At the time of the preparation of the magnetic viscous fluid, an amount of 0.3% by mass or more of the organic molybdenum compound is preferably used, and more preferably 1.0% by mass or more thereof is more preferably used in a case where the total mass of the components other than the magnetic particles used in the preparation of the magnetic viscous fluid is 100% by mass. In addition, an amount of 3.0% by mass or less of the organic molybdenum compound is preferably used, and more preferably 2.0% by mass or less thereof is more preferably used in a case where the total mass of the components other than the magnetic particles used in the preparation of the magnetic viscous fluid is 100% by mass. Regarding the content of the organic molybdenum compound in the prepared magnetic viscous fluid, the content of the organic molybdenum compound with respect to the mass of the magnetic viscous fluid excluding the mass of the magnetic particles (that is, with respect to 100% by mass of such amass) is preferably 0.3% by mass or more and more preferably 1.0% by mass or more, and it is preferably 3.0% by mass or less and more preferably 2.0% by mass or less. It is noted that as described above, the organic molybdenum compound containing sulfur may be partially reduced to molybdenum disulfide. However, even in such a case, a part of the organic molybdenum compound used for the preparation of the magnetic viscous fluid is generally contained in the prepared magnetic viscous fluid as an organic molybdenum compound, and such an organic molybdenum compound can be detected and identified by analyzing the magnetic viscous fluid with a known method. For example, an inorganic molybdenum compound is generally insoluble or poorly soluble in a carrier fluid. Accordingly, in a case where a magnetic viscous fluid is allowed to stand naturally, or the magnetic viscous fluid is centrifuged (including ultracentrifugation), whereby molybdenum is detected in the supernatant component after the insoluble component sedimented, it can be determined that the magnetic viscous fluid contains an organic molybdenum compound. Specific examples of the determination method include the methods described in Examples, which will be described later.

<Additive>

The magnetic viscous fluid contains magnetic particles, a carrier fluid, and an organic molybdenum compound. They are as described above. The magnetic viscous fluid can contain one or more kinds of additives in addition to those components. Hereinafter, additives that may be contained in the magnetic viscous fluid will be described.

(Organic zinc compound)

The magnetic viscous fluid can contain an organic zinc compound. The organic zinc compound is an organic compound containing zinc (Zn), and it is presumed that the organic zinc compound contributes to further improving the durability of the magnetic viscous fluid. From this point, preferred examples of the organic zinc compound include an organic zinc compound that can function as an extreme pressure agent or a friction modifier (also referred to as an FM agent).

Examples of the more preferred organic zinc compounds include zinc dialkyldithiophosphate (ZnDTP). The zinc dialkyldithiophosphate can be a compound represented by General Formula 2 below.

General Formula 2

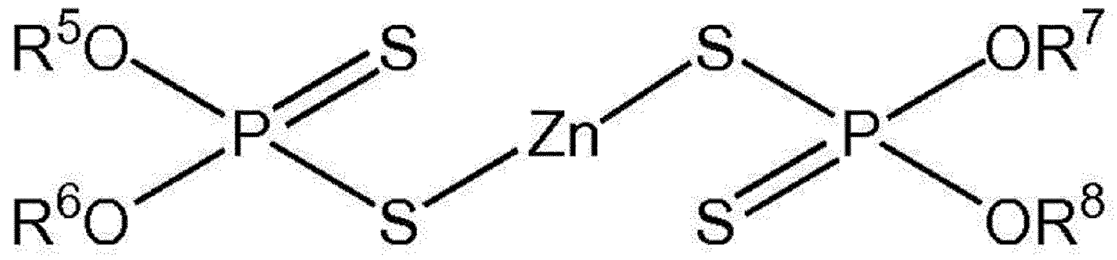

In Formula 2, $R^5$ to $R^8$ each independently represent a hydrocarbon group. The hydrocarbon group is preferably a hydrocarbon group having 1 to 20 carbon atoms. Specific examples of the above-described hydrocarbon group include primary alkyl groups such as a methyl group, an ethyl group, a propyl group, a butyl group, a pentyl group, a hexyl group, a heptyl group, an octyl group, an nonyl group, a decyl group, an undecyl group, a dodecyl group, and a tridecyl group, a tetradecyl group, a pentadecyl group, a hexadecyl group, a heptadecyl group, an octadecyl group, a nonadecyl group, and an icosyl group; secondary alkyl groups such as a secondary propyl group, a secondary butyl group, a secondary pentyl group, a secondary hexyl group, a secondary heptyl group, a secondary octyl group, a secondary nonyl group, a secondary decyl group, a secondary undecyl group, a secondary dodecyl group, a secondary tridecyl group, a secondary tetradecyl group, a secondary pentadecyl group, a secondary hexadecyl group, a secondary heptadecyl group, a secondary octadecyl group, a secondary nonadecyl group, and a secondary icosyl group; tertiary alkyl groups such as a tertiary butyl group, a tertiary pentyl group, a tertiary hexyl group, a tertiary heptyl group, a tertiary octyl group, a tertiary nonyl group, a tertiary decyl group, a tertiary undecyl group, a tertiary dodecyl group, a tertiary tridecyl group, a tertiary tetradecyl group, a tertiary pentadecyl group, a tertiary hexadecyl group, a tertiary heptadecyl group, a tertiary octadecyl group, a tertiary nonadecyl group, and a tertiary icosyl group; branched alkyl groups such as a branched butyl group (an isobutyl group or the like), a branched pentyl group (an isopentyl group or the like), a branched hexyl group (an isohexyl group), a branched heptyl group (an isoheptyl group), a branched octyl group (an isooctyl group, a 2-ethylhexyl group, or the like), a branched nonyl group (an isononyl group or the like), a branched decyl group (an isodecyl group or the like), a branched undecyl group (an isoundecyl group or the like), a branched dodecyl group (an isododecyl group or the like), a branched tridecyl group (an isotridecyl group or the like), a branched tetradecyl group (an isotetradecyl group), a branched pentadecyl group (an isopentadecyl group or the like), a branched hexadecyl group (an isohexadecyl group), a branched heptadecyl group (an isoheptadecyl group or the like), a branched octadecyl group (an isooctadecyl group or the like), a branched nonadecyl group (an isononadecyl group or the like), and a branched icosyl group (an isoicosyl group or the like); aryl groups such as a phenyl group, a toluyl group, a xylyl group, a cumenyl group, a mesityl group, a benzyl group, a phenethyl group, a styryl group, a cinnamyl group, a benzhydryl group, a trityl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group, a dodecylphenyl group, a styrylated phenyl group, a p-cumylphenyl group, a phenylphenyl group, and a benzylphenyl group. In General Formula 2, $R^5$ to $R^8$ may be the same or different from each other.

As the organic zinc compound, a commercially available product can be used, or a compound prepared by a known method can also be used. Examples of the commercially available product thereof include the ADEKA KIKU-LUBE series manufactured by ADEKA Corporation. However, the examples thereof are not limited to this.

From the viewpoint of further improving the durability and/or suppressing coloration of the magnetic viscous fluid, the content of the organic zinc compound in the magnetic viscous fluid is preferably 3.0% by mass or more and more preferably 4.0% by mass or more with respect to the mass of the magnetic viscous fluid excluding the mass of the magnetic particles (that is, with respect to 100% by mass of such a mass). In addition, the content of the organic zinc compound in the magnetic viscous fluid can be, for example, 10.0% by mass or less or 5.0% by mass or less.

(Phenol-based compound and sulfur-based compound)

The magnetic viscous fluid can contain a phenol-based compound and/or a sulfur-based compound, and from the viewpoint of reducing the viscosity of the magnetic viscous fluid, it preferably contains a phenol-based compound and a sulfur-based compound. The phenol-based compound and the sulfur-based compound can function as, for example, an antioxidant.

Phenol-based compound

In the present invention and the present specification, the "phenol-based compound" includes a phenol and a derivative thereof. Examples of the phenol-based compound include 2,6-di-tert(tertiary)-butylphenol (hereinafter, "tert-butyl" is abbreviated as "t-butyl"), 2,6-di-t-butyl-4-methylphenol, 2,6-di-t-butyl-4-ethylphenol, 2,4-dimethyl-6-t-butylphenol, 4,4'-methylenebis(2,6-di-t-butylphenol), 4,4'-bis(2,6-di-t-butylphenol), 4,4'-bis(2-methyl-6-t-butylphenol), 2,2'-methylenebis(4-methyl-6-t-butylphenol), 2,2'-methylenebis(4-ethyl-6-t-butylphenol), 4,4'-butylidenebis(3-methyl-6-t-butylphenol), 4,4'-isopropyridenebis(2,6)-di-t-butylphenol), 2,2'-methylenebis(4-methyl-6-cyclohexylphenol), 2,2'-methylenebis(4-methyl-6-nonylphenol), 2,2'-isobutylidenebis(4,6-dimethylphenol), 2,6-bis(2'-hydroxy-3'-t-butyl-5'-methylbenzyl)-4-methylphenol, 3-t-butyl-4-hydroxyanisole, 2-t-butyl-4-hydroxyanisole, stearyl 3-(4-hydroxy-3,5-di-t-butylphenyl)propionate, oleyl 3-(4-hydroxy-3,5-di-t-butylphenyl)propionate, dodecyl 3-(4-hydroxy-3,5-di-t-butylphenyl)propionate, decyl 3-(4-hydroxy-3,5-di-t-butylphenyl)propionate, octyl 3-(4-hydroxy-3,5-di-t-butylphenyl)propionate, tetrakis{3-(4-hydroxy-3,5-di-t-butylphenyl)propionyloxymethyl}methane, 3-(4-hydroxy-3,5-di-t-butylphenyl)propionic acid glycerin monoester, an ester of 3-(4-hydroxy-3,5-di-t-butylphenyl)propionic acid and glycerin monooleyl ether, 3-(4-hydroxy-3,5-di-t-butylphenyl)propionic acid butylene glycol diester, 3-(4-hydroxy-3,5-di-t-butylphenyl)propionic acid thiodiglycol diester, 4,4'-thiobis(3-methyl-6-t-butylphenol), 4,4'-thiobis(2-methyl-6-t-butylphenol), 2,2'-thiobis(4-methyl-6-t-butylphenol), 2,6-di-t-butyl-$\alpha$-dimethylamino-p-cresol, 4,6-bis(octylthiomethyl)-o (ortho)-cresol, 4,6-bis(dodecylthiomethyl)-o-cresol, 2,6-di-t-butyl -4-(N,N'-dimethylaminomethylphenol), bis(3,5-di-t-butyl-4-hydroxybenzyl)sulfate, tris{(3,5-di-t-butyl-4-hydroxyphenyl)propionyl-oxyethyl}isocyanurate, tris (3,5-di-t-butyl-4-hydroxyphenyl)isocyanurate, 1,3, 5-tris (3,5-di-t-butyl-4-hydroxy)benzyl)isocyanurate, bis{2-methyl-4-(3-n-alkylthiopropionyloxy)-5-t-butylphenyl}sulfate, 1,3,5-tris(4-t-butyl-3-hydroxy-2,6-dimethylbenzyl)isocyanurate, tetraphthaloyl-di(2,6-dimethyl-4-t-butyl-3-hydroxybenzylsulfide), 6-(4-hydroxy-3,5-di-t-butylanilino)-2,4-bis(octylthio)-1,3,5-triazine, 2,2'-thio-diethylenebis[3-(3,5-di-t-butyl-4-hydroxyphenyl)propionate], tridecyl-3-(3,5-di-t-butyl-4-hydroxyphenyl)propionate, pentaerythrityl-tetrakis[3-(3,5-di-t-butyl-4-hydroxyphenyl)propionate], octadecyl-3-(3,5-di-t-butyl-4-hydroxyphenyl)propionate, octyl-3-(3,5-di-t-butyl-4-hydroxyphenyl)propionate, heptyl-3-(3,5-di-t-butyl-4-hydroxyphenyl)propionate, octyl-3-(3-methyl-5-t-butyl-4-hydroxyphenyl)propionate, nonyl-3-(3-methyl-5-t-butyl-4-hydroxyphenyl)propionate, hexamethylenebis[3-(3,5-di-t-butyl-4-hydroxyphenyl)propionate], an alkyl ester in which a side chain of [3,5-bis(1,1-dimethyl-ethyl)-4-hydroxy]benzenepropionic acid has 7 to 9 carbon atoms, 2,4,8-tetraoxaspiro[5,5]undecane-3,9-diylbis(2-methylpropane-2,1-diyl)bis[3-(3,5-di-t-butyl-4 -hydroxyphenyl)propionate], 3,5-di-t-butyl-4-hydroxy-benzyl-phosphate diester, bis(3-methyl-4-hydroxy-5-t-butylbenzyl)sulfide, 3,9-bis[1,1-dimethyl-2-{$\beta$-(3-t-butyl-4-hydroxy-5-methylphenyl)propionyloxy}ethyl]-2,4,8,10 -tetraoxaspiro[5,5]undecane, 1, 1,3-tris(2-methyl-4-hydroxy-5-t-butylphenyl)butane, 1,1-bis(2-methyl-4-hydroxy-5-t-butylphenyl)butane, 1,3,5-trimethyl-2,4,6-tris(3,5-di-t-butyl-4-hydroxybenzyl)benzene, 2,4,6-tris(3,5-di-t-butyl-4-hydroxybenzyl)mesitylene, a 3,5-di-t-butyl-4-hydroxybenzylalkyl ester, and bis{3,3'-bis-(4'-hydroxy-3'-t-butylphenyl)butyric acid}glycol ester.

As the phenol-based compound, a commercially available product can be used, or those prepared by a known method can also be used. Examples of the preferred phenol-based compound include a hindered phenol-based compound. In the present invention and the present specification, the "hindered phenol-based compound" refers to a compound having a substituent at the ortho position with respect to the hydroxy group of the phenol. Examples of the substituent at the ortho position include an alkyl group, an alkoxy group, an amino group, and a halogen atom. Among these, an alkyl group such as a methyl group, an ethyl group, an n-propyl group, an isopropyl group, an n-butyl group, a secondary butyl group, an isobutyl group, or a tertiary butyl group is preferable, an isopropyl group, a secondary butyl group, an isobutyl group, or a tertiary butyl group is more preferable, and a tertiary butyl group is still more preferable. In addition, it is preferable that both of the two ortho positions with respect to the hydroxy group of the phenol are substituted with a substituent. The hindered phenol-based compound is commercially available generally as a hindered phenol-based antioxidant. Specific examples of the commercially available phenol-based compounds include the ADEKASTAB AO series manufactured by ADEKA Corporation. However, the examples thereof are not limited to this.

Sulfur-based compound

In the present invention and the present specification, the "sulfur-based compound" shall refer to a compound containing sulfur (S), and it is preferably an organic compound containing sulfur. In a case where the above-described organic molybdenum compound contains sulfur, such an organic molybdenum compound shall not correspond to the "sulfur-based compound" described here.

The sulfur-based compound is preferably a thioether-based compound from the viewpoint of reducing the viscosity of the magnetic viscous fluid. The thioether-based compound is a compound having a thioether bond (-S-), where the thioether-based compound is preferably an organic compound having a thioether bond. Specific examples thereof include dilauryl thiodipropionate, ditridecyl thiodipropionate, distearyl thiodipropionate, pentaerythritol tetrakis(3-dodecylthiopropionate), and 4,4-thiobis(2-t-butyl-5-methylphenol)bis-3-(dodecylthio)propionate.

As the sulfur-based compound, a commercially available product can be used, or those prepared by a known method can also be used. As the commercially available product thereof, it is possible to use, for example, those commercially available as the thioether-based antioxidant. Specific examples of the commercially available product thereof include the ADEKA ECOROYAL AIN series manufactured by ADEKA Corporation. However, the examples thereof are not limited to this.

In a case where the magnetic viscous fluid contains a phenol-based compound and/or a sulfur-based compound, the content thereof is preferably 0.1% by mass or more and more preferably 0.5% by mass or more, and it is preferably 3.0% by mass or less and more preferably 2.0% by mass or less with respect to the mass of the magnetic viscous fluid excluding the mass of the magnetic particles (that is, with respect to 100% by mass of such a mass). In a case where the phenol-based compound is contained but the sulfur-based compound is not contained, the above-described content is the content of the phenol-based compound, in a case where the sulfur-based compound is contained but the phenol-based compound is not contained, it is the content of the sulfur-based compound, and In a case where the phenol-based compound and the sulfur-based compound are contained, it is the total content thereof.

(Dispersing agent)

The magnetic viscous fluid can contain a dispersing agent for increasing the dispersibility of the magnetic particles in the magnetic viscous fluid. As the dispersing agent, it is possible to use each of components that can contribute to the improvement of the dispersibility of the magnetic particles. Specific examples of the compound that can function as the dispersing agent include a fatty acid such as oleic acid or stearic acid and a silicone-based compound. The "silicone-based compound" is a compound containing a siloxane bond (Si-O-Si), and it is preferably an organic compound containing a siloxane bond. In a case where the carrier fluid contained in the magnetic viscous fluid is a silicone-based fluid, the silicone-based compound shall refer to a silicone-based compound different from the silicone-based fluid. It is preferable to use the silicone-based fluid and the silicone-based compound in combination from the viewpoint of reducing the viscosity of the magnetic viscous fluid.

Examples of the silicone-based compound include trimethyl siloxysilicate. Examples of the commercially available product containing trimethyl siloxysilicate include KF-7312J (a dissolved product of cyclopentasiloxane), X-21-5595 (a dissolved product of isododecane), KF-9021 (a dissolved product of cyclopentasiloxane), and X-21-5249L (a dissolved product of dimethy lpolysiloxane (also referred to as dimethicone), which are manufactured by Shin-Etsu Chemical Co., Ltd.

A polymer can also be used as the silicone-based compound. Here, the polymer is not limited to the homopolymer, and it can be a copolymer. The polymer is generally called a resin and is commercially available. Examples of the silicone-based compound of the polymer include partially cross-linked polyether-modified silicone, partially cross-linked polyglycerin-modified silicone, linear or branched polyoxyethylene-modified organopolysiloxane, linear or branched polyoxyethylene polyoxypropylene-modified organopolysiloxane, linear or branched polyoxyethylene-alkyl co-modified organopolysiloxane, linear or branched polyoxyethylene polyoxypropylene-alkyl co-modified organopolysiloxane, linear or branched polyglycerin-modified organopolysiloxane, and linear or branched polyglycerin-alkyl co-modified organopolysiloxane. Specific examples of the commercially available product thereof include the following products manufactured by Shin-Etsu Chemical Co., Ltd.: KSG-210, 240, 310, 320, 330, 340, 320Z, 350Z, 710, 810, 820, 830, 840, 820Z, 850Z; KF-6011, 6013, 6017, 6043, 6028, 6038, 6048, 6100, 6104, 6105, 6106; and KP-578. Preferred specific examples of the silicone-based compound include acrylic silicone. Here, the "acrylic silicone" shall refer to a copolymer of a (meth)acrylic acid ester and dimethyl polysiloxane. Specific examples of the acrylic silicone include KP-578 manufactured by Shin-Etsu Chemical Co., Ltd.

The content of the silicone-based compound in the magnetic viscous fluid (however, the content of the silicone-based fluid is excluded in the case where the carrier fluid is the silicone-based fluid) is preferably a range of 0.1% to 10.0% by mass and more preferably in a range of 0.5% to 5.0% by mass with respect to the mass of the magnetic viscous fluid excluding the mass of the magnetic particles (that is, with respect to 100% by mass of such a mass).

In addition to the components described above, the magnetic viscous fluid can also contain, at any content, one or more of various components known as additives that can be used in the magnetic viscous fluid.

The magnetic viscous fluid can be produced by mixing the above-described various components in any order or at the same time. Examples of the preferred production method include a production method described below.

The magnetic viscous fluid can be applied to a magnetic viscous fluid device. This point will be further described later.

[Production method for magnetic viscous fluid]

One aspect of the present invention relates to a production method for the magnetic viscous fluid. The production method includes subjecting a mixture containing the magnetic particles, the carrier fluid, and the organic molybdenum

compound to resonance acoustic mixing.

"Resonance acoustic mixing" means carrying out mixing by using acoustic resonance energy. It is preferable that a mixture containing particles is sealed in a container, a vibration of a low-frequency of about 60 hertzs (Hz) is applied to the container to vibrate it up and down with a high acceleration force, the natural frequency of the particles in the container (for example, about 60 Hz) is used to propagate high energy to the particles by resonance, and the components in the container are mixed by the collision between the particles and/or the collision between the particles and the container. The inventors of the present invention conceive that in the above-described production method, the employment of the resonance acoustic mixing as the mixing treatment can contribute to reducing the viscosity of the magnetic viscous fluid. A mixer for carrying out the resonance acoustic mixing is generally called a resonance acoustic mixer. The resonance acoustic mixer is generally denoted as a resonance acoustic mixer (RAM). As the resonance acoustic mixer, it is possible to use, for example, a low-frequency resonance acoustic mixer PharmaRAM manufactured by Resodyn Corporation. The treatment conditions can be set such that, for example, the frequency is about 60 Hz, the gravitational acceleration is about 50 to 100 G, and the mixing treatment time is about 1 to 60 minutes. However, the above-described treatment conditions are merely an example, and the mixing conditions may be set depending on the kind, mixing ratio, treatment amount, and the like of the components to be used for producing the magnetic viscous fluid. It is noted that regarding the unit G of the gravitational acceleration, 1G = 9.80665 $m/s^2$.

After the mixing, post-treatment can be carried out by a known method, as necessary. Examples of the post-treatment include a stirring treatment, an ultrasonic wave treatment, a dispersion treatment using a sand mill or the like, and filtration.

[Magnetic viscous fluid device]

One aspect of the present invention relates to a magnetic viscous fluid device including the magnetic viscous fluid.

Specific examples of the magnetic viscous fluid device include a brake, a clutch, a damper, and a shock absorber. These can be used in automobiles, various vehicles, building structures, drones, home appliances. In addition, specific examples of the magnetic viscous fluid device include various devices that are used in the field of health and welfare, such as an artificial leg, an artificial hand, and a training device. In a case of containing the magnetic viscous fluid described in detail above, the magnetic viscous fluid device can exhibit a high output in a case where a magnetic field is applied and thus can return to, in a short time, a state before the magnetic field is applied, by releasing the application of the magnetic field. Furthermore, since the magnetic viscous fluid can exhibit excellent durability, the magnetic viscous fluid device including the magnetic viscous fluid can exhibit excellent performance for a long period of time.

The magnetic viscous fluid device may be any device as long as the magnetic viscous fluid is included in a portion of the device into which the magnetic viscous fluid should be introduced, a known technique related to the magnetic viscous fluid device can be applied for details of the device configuration and the like.

Examples

Hereinafter, the present invention will be described based on Examples. However, the present invention is not limited to the embodiments shown in Examples. "Parts" described below means parts by mass.

[Example 1]

<Prescription of magnetic viscous fluid>

Magnetic particles: 100.00 parts
Carbonyl iron powder CM manufactured by BASF SE
Carrier fluid: 17.00 parts
KF-96-20CS (a silicone oil) manufactured by Shin-Etsu Chemical Co., Ltd.
Organic molybdenum compound: 0.20 parts
SAKURA-LUBE 600 manufactured by ADEKA Corporation (molybdenum dithiocarbamate (MoDTC) represented by General Formula 1, where $X^1$ and $X^2$ in General Formula 1 are a sulfur atom, and $X^3$ and $X^4$ are an oxygen atom)
Organic zinc compound: 0.55 parts
KIKU-LUBE Z-112 manufactured by ADEKA Corporation (zinc dialkyldithiophosphate (ZnDTP) represented by General Formula 2)

Phenol-based compound: 0.05 parts
ADEKA ADEKA STAB AO-50 (a hindered phenol-based antioxidant) manufactured by ADEKA Corporation
Sulfur-based compound: 0.11 parts
ADEKA ECOROYAL AIN-700 (a thioether-based antioxidant) manufactured by ADEKA Corporation
Silicone-based compound: 0.25 parts
KP578 (an acrylic silicone) manufactured by Shin-Etsu Chemical Co., Ltd.

<Preparation of magnetic viscous fluid>

The above-described various components were charged into an airtight container made of polypropylene having an inner volume of 120 ml so that the amount of the magnetic particles was 200 g, this container was disposed in a low-frequency resonance acoustic mixer PharmaRAM manufactured by Resodyn Corporation, and resonance acoustic mixing was carried out for 10 minutes under the mixing conditions of a frequency of 60 Hz and a gravitational acceleration of 65 G. The liquid after such resonance acoustic mixing was filtered through a nylon mesh having an opening size of 100 $\mu$m.

In this way, a magnetic viscous fluid of Example 1 was prepared.

As a result of determining the content of the magnetic particles (unit: % by volume) in the magnetic viscous fluid according to the method described above, it was the value shown in Table 1.

In the prescription of the magnetic viscous fluid of Example 1, the content of the organic molybdenum compound is 1.1% by mass, where the total mass of the components other than the magnetic particles is 100% by mass. With respect to the mass of the magnetic viscous fluid excluding the mass of the magnetic particles (that is, with respect to 100% by mass of the total mass of the components other than the magnetic particles), the content of the organic zinc compound in the magnetic viscous fluid of Example 1 is 3.0% by mass, and the content of the antioxidant (phenol-based compound + sulfur-based compound) is 0.9% by mass.

[Examples 2 to 5 and Comparative Example 2]

In Example 2, Example 3, Example 5, and Comparative Example 2, magnetic viscous fluids were prepared in the same manner as in Example 1, except that the amount of magnetic particles in the prescription of the magnetic viscous fluid was changed such that the content of the magnetic particles in the magnetic viscous fluid was the value shown in Table 1.

In Example 4, magnetic viscous fluid was prepared in the same manner as in Example 1, except that the carrier fluid was changed to a silicone oil obtained by blending KF-96A-6CS and KF-96-20CS manufactured by Shin-Etsu Chemical Co., Ltd., and the amount of magnetic particles in the prescription of the magnetic viscous fluid was changed such that the content of the magnetic particles in the magnetic viscous fluid was the value shown in Table 1.

As a result of determining the content of the magnetic particles (unit: % by volume) of the prepared magnetic viscous fluid, in the magnetic viscous fluid, by the same method as in Example 1, it was the value shown in Table 1.

In the prescription of the magnetic viscous fluid of each of Example 2 to Examples 5 and Comparative Example 2, the content of the organic molybdenum compound is 1.1% by mass, where the total mass of the components other than the magnetic particles is 100% by mass.

With respect to the mass of the magnetic viscous fluid excluding the mass of the magnetic particles (that is, with respect to 100% by mass of the total mass of the components other than the magnetic particles), the content of the organic zinc compound in the magnetic viscous fluid of each of Example 2 to Example 5 and Comparative Example 2 is 3.0% by mass, and the content of the antioxidant (phenol-based compound + sulfur-based compound) is 0.9% by mass.

[Comparative Example 3]

An attempt was made to prepare a magnetic viscous fluid in the same manner as in Example 1, except that the amount of magnetic particles in the prescription of the magnetic viscous fluid was changed such that the content of the magnetic particles in the magnetic viscous fluid was the value (65% by volume) shown in Table 1. However, it was not possible to obtain a fluid having fluidity because the obtained mixture was sandy.

[Comparative Example 4]

A magnetic viscous fluid was prepared in the same manner as in Example 1, except that no organic molybdenum compound was added.

As a result of determining the content of the magnetic particles (unit: % by volume) of the prepared magnetic viscous fluid, in the magnetic viscous fluid, by the same method as in Example 1, it was the value shown in Table 1.

With respect to the mass of the magnetic viscous fluid excluding the mass of the magnetic particles (that is, with respect to 100% by mass of the total mass of the components other than the magnetic particles), the content of the organic zinc compound in the magnetic viscous fluid of Example 4 is 3.0% by mass, and the content of the antioxidant (phenol-based compound + sulfur-based compound) is 0.9% by mass.

[Comparative Example 5]

A magnetic viscous fluid was prepared in the same manner as in Example 1, except that the carrier fluid was changed to KF-96-10CS (a silicone oil) manufactured by Shin-Etsu Chemical Co., Ltd. and the amount of the carrier fluid in the prescription of the magnetic viscous fluid was changed from 17.0 parts to 16.9 parts.

As a result of determining the content of the magnetic particles (unit: % by volume) of the prepared magnetic viscous fluid, in the magnetic viscous fluid, by the same method as in Example 1, it was the value shown in Table 1.

In the prescription of the magnetic viscous fluid of Comparative Example 5, the content of the organic molybdenum compound is 1.1% by mass, where the total mass of the components other than the magnetic particles is 100% by mass. With respect to the mass of the magnetic viscous fluid excluding the mass of the magnetic particles (that is, with respect to 100% by mass of the total mass of the components other than the magnetic particles), the content of the organic zinc compound in the magnetic viscous fluid of Example 5 is 3.0% by mass, and the content of the antioxidant (phenol-based compound + sulfur-based compound) is 0.9% by mass.

[Comparative Example 1]

A magnetic viscous fluid (MRF-132DG manufactured by LORD Corporation) commercially available as an MR fluid was used as the magnetic viscous fluid of Comparative Example 1.

[Comparative Example 6]

A magnetic viscous fluid (MRF-140CG manufactured by LORD Corporation) commercially available as an MR fluid, which was different from that of Comparative Example 1, was used as the magnetic viscous fluid of Comparative Example 6.

In Comparative Examples 1 and Comparative Example 6, the content (unit: % by volume) of the magnetic particles in the magnetic viscous fluid was determined by the same method as in Example 1. The true density of the magnetic particles was determined by subjecting the magnetic particles collected from the magnetic viscous fluid to the method described in Example 1.

[Shear viscosity of magnetic viscous fluid]

A part of the magnetic viscous fluid of each of Examples and Comparative Examples was used as a measurement sample, and using this sample, the shear viscosity to be measured at a shear rate of 1,000 $sec^{-1}$ at a measurement temperature of 25°C was determined according to the method described above. For the measurement, a coaxial rotational rheometer ONRH-1 type manufactured by OhnaTech Inc. was used as the viscometer, G2B-145 manufactured by OhnaTech Inc. was used as the inner cylinder, Small-175 manufactured by OhnaTech Inc. was used as the outer cylinder, the checking of the measurement temperature was carried out using a platinum thermometer installed in the inner cylinder.

Regarding Comparative Example 3, the description was made as "Unmeasurable" in Table 1 described later since a fluid having fluidity could not be obtained as described above.

[Viscosity of carrier fluid]

A part of the magnetic viscous fluid of each of Examples and Comparative Examples was used as a sample for collecting a carrier fluid, this sample was allowed to stand naturally to sediment the solid content, and the supernatant was collected with a pipetter. The viscosity of the carrier fluid collected in this way was determined at a measurement temperature of 25°C by the above-described method using an EMS viscometer EMS-1000 manufactured by KYOTO ELECTRONICS MANUFACTURING Co., Ltd. as an electromagnetic rotary viscometer. It is noted that the supernatant collected above may contain a component dissolved in the carrier fluid. The influence of such a component on the measured value of the viscosity is generally negligible and thus can be ignored. As a result, the viscosity of the supernatant collected above shall be regarded as the viscosity of the carrier fluid.

[Presence or absence of organic molybdenum compound]

An inorganic molybdenum compound is generally insoluble or poorly soluble in a carrier fluid. Accordingly, in a case where a magnetic viscous fluid is allowed to stand naturally, or the magnetic viscous fluid is centrifuged (including ultracentrifugation), whereby molybdenum is detected in the supernatant component after the insoluble component sedimented, it can be determined that the magnetic viscous fluid contains an organic molybdenum compound.

Regarding the magnetic viscous fluid of each of Examples and Comparative Examples, a supernatant component obtained by being allowed to stand to be sedimented after measuring the viscosity of the carrier fluid was collected in an ashing container made of Teflon (registered trade name) and subjected to an ashing treatment. The residual fraction after the ashing treatment was subjected to inductively coupled plasma (ICP) analysis, and it was determined that the magnetic viscous fluid contained the organic molybdenum compound in a case where molybdenum was detected. In this case, the description was made as "Contained" in the column of "Organic molybdenum compound" in Table 1. On the other hand, in a case where molybdenum was not detected, it was determined that the magnetic viscous fluid did not contain the organic molybdenum compound. In this case, the description was made as "Not contained" in the column of "Organic molybdenum compound" in Table 1.

[Evaluation of output of magnetic viscous fluid device]

The evaluation was carried out using a magneto rheological (MR) characteristic evaluation device manufactured by ER Tech Co., Ltd. 2 ml of the magnetic viscous fluid of each of Examples and Comparative Examples was placed in a groove provided in a coil portion of the MR characteristic evaluation device, a rotor having a gap spacing of 0.05 mm (average distance from rotor center to gap part: 21.5 mm) was inserted into the groove part, the overflowing magnetic viscous fluid was removed with a paper rag (KimWipes manufactured by NIPPON PAPER CRECIA Co., LTD.), a magnetic field was subsequently applied at a rotor rotation speed of 20 rpm and a coil current of 0.092 amperes (A), and the torque measurement was carried out every 20 to 30 milliseconds, for 10 seconds. It can be determined that the larger the value of the torque obtained here is, the higher the output is. Table 1 shows an arithmetic average of measured torque values from 9 seconds to 10 seconds among the measured torque values, and based on this value, the output was evaluated according to the following determination criteria.

(Evaluation criteria)

A: 1.9 newton meters (Nm) or more
B: 1.7 Nm or more and less than 1.9 Nm
C: Less than 1.7 Nm

[Evaluation of drag torque in a state where magnetic field state is not applied]

A hollow type MR fluid brake manufactured by ER Tech Co., Ltd., was filled with the magnetic viscous fluid of each of Examples and Comparative Examples, and the torque in a state where no current was applied (that is, in a state where magnetic field state was not applied) was measured using a torque meter. Table 1 shows the measured torque value, and based on this value, the drag torque was evaluated in a state where no-magnetic field state, according to the following determination criteria. It can be determined that the smaller the value of the torque measured here is, the more reduced torque is achieved in a case where no magnetic field is applied.

(Evaluation criteria)

A: Less than 0.13 Nm
B: 0.13 Nm or more and 0.15 Nm or less
C: More than 0.15 Nm

[Evaluation of durability of magnetic viscous fluid]

The durability of the magnetic viscous fluid of each of Examples and Comparative Examples was evaluated using the MR characteristic evaluation device that was used for the output evaluation. 2 ml of the magnetic viscous fluid

of each of Examples and Comparative Examples was placed in a groove provided in a coil portion of the MR characteristic evaluation device, a rotor having a gap spacing of 0.05 mm (average distance from rotor center to gap part: 21.5 mm) was inserted into the gap part, the overflowing magnetic viscous fluid was removed with a paper rag (KimWipes manufactured by NIPPON PAPER CRECIA Co., LTD.), the rotor rotation speed was set to 80 rpm, a proportional-integral-differential (PID) control was carried out so that the torque was 2 Nm, and the test was carried out for 2 hours and 30 minutes. At that time, the rotation speed was reduced by 20 rpm every 30 minutes, the torque was read while changing the coil current, and the time taken for the torque value to decrease to 85% of the initial value was determined by calculation from the temporal slope of the measured values at a coil current of 0.092 A (the intercept at time 0 was fixed to the actually measured value). It can be said that a magnetic viscous fluid having a larger value obtained in this way is more excellent in durability. Table 1 shows the values of the time obtained here, and based on this value, the durability of the magnetic viscous fluid was evaluated according to the following criteria.

(Evaluation criteria)

A: 2.0 hours or more

B: 1.5 hours or more and less than 2.0 hours

C: Less than 1.5 hours

The above evaluation results are shown in Table 1 (Table 1-1 and Table 1-2). In Comparative Example 3, a fluid having fluidity could not be obtained as described above, and thus various evaluations were not carried out, and the description was made as "Unmeasurable" in Table 1.

[Table 1-1]

| | | Example 1 | Example 2 | Example 3 | Example 4 | Example 5 |
|---|---|---|---|---|---|---|
| Magnetic particle content | | 40% by volume | 35% by volume | 45% by volume | 40% by volume | 50% by volume |
| Organic molybdenum compound | | Contained | Contained | Contained | Contained | Contained |
| Carrier fluid density | | 19 mPa·sec | 19 mPa·sec | 19 mPasec | 10 mPa·sec | 19 mPa sec |
| Shear viscosity of magnetic viscous fluid | | 250 mPa·sec | 110 mPa·sec | 350 mPa sec | 140 mPa·sec | 500 mPa·sec |
| Output (torque (unit: Nm)) | | 1.8 | 1.7 | 1.9 | 1.8 | 2.0 |
| | | Determination: B | Determination: B | Determination: A | Determination: B | Determination: A |
| Drag torque in state where magnetic field state is not applied (unit: Nm) | | 0.12 | 0.10 | 0.13 | 0.10 | 0.15 |
| | | Determination: A | Determination: A | Determination: B | Determination: A | Determination: B |
| Durability | | 2.9h | 20.0h | 1.6h | 1.5h | 1.5h |
| | | Determination: A | Determination: A | Determination: B | Determination: B | Determination: B |

[Table 1-2]

| | | Comparative Example 1 | Comparative Example 2 | Comparative Example 3 | Comparative Example 4 | Comparative Example 5 | Comparative Example 6 |
|---|---|---|---|---|---|---|---|
| Magnetic particle content | | 32% by volume | 55% by volume | 65% by volume | 40% by volume | 40% by volume | 40% by volume |
| Organic molybdenum compound | | Contained | Contained | Contained | Not contained | Contained | Contained |
| Carrier fluid density | | 13 mPa sec | 19 mPa·sec | 19 mPa see | 19 mPa sec | 9 mPa sec | 13 mPa see |
| Shear viscosity of magnetic viscous fluid | | 250 mPa·sec | 400 mPa·sec | Unmeasurable | 350 mPa·sec | 130 mPa·sec | 750 mPa·sec |
| Output (torque (unit: Nm)) | | 1.6 | 1.9 | | 1.8 | 1.8 | 1.8 |
| | | Determination: C | Determination: A | | Determination: B | Determination: B | Determination: B |
| Drag torque in state where magnetic field state is not applied (unit: Nm) | | 0.12 | 0.90 | | 0.13 | 0.10 | 0.24 |
| | | Determination: A | Determination: C | | Determination: B | Determination: A | Determination: C |
| Durability | | 20.0h | 1.2h | | 1.4h | 1.3h | 1.9h |
| | | Determination: A | Determination: C | | Determination: C | Determination: C | B |

From the results shown in Table 1, according to the magnetic viscous fluids of Examples, it can be confirmed that it is possible to increase the output of the magnetic viscous fluid device and reduce the torque in a case where no magnetic field is applied and that the magnetic viscous fluids of Examples have excellent durability.

One aspect of the present invention is useful in various technical fields in which a magnetic viscous fluid is used and in various technical fields in which a magnetic viscous fluid is expected to be used.

## Claims

**1.** A magnetic viscous fluid comprising:

magnetic particles;
a carrier fluid; and
an organic molybdenum compound,
wherein a content of the magnetic particles is 35% by volume or more and 50% by volume or less with respect to a volume of the magnetic viscous fluid,
a viscosity of the carrier fluid, which is measured with an electromagnetic rotary viscometer at a measurement temperature of 25°C, is 10 mPa·sec or more, and
a shear viscosity of the magnetic viscous fluid, which is measured at a shear rate of 1,000 $sec^{-1}$ at a measurement temperature of 25°C, is 500 mPa sec or less.

**2.** The magnetic viscous fluid according to claim 1,
wherein the content of the magnetic particles is 40% by volume or more and 50% by volume or less with respect to the volume of the magnetic viscous fluid.

**3.** The magnetic viscous fluid according to claim 1 or 2,
wherein the organic molybdenum compound is molybdenum dithiocarbamate.

**4.** The magnetic viscous fluid according to any one of claims 1 to 3, further comprising an organic zinc compound.

**5.** The magnetic viscous fluid according to claim 4,
wherein the organic zinc compound is zinc dialkyldithiophosphate.

**6.** The magnetic viscous fluid according to claim 4 or 5,
wherein a content of the organic zinc compound is 3.0% by mass or more with respect to a mass of the magnetic viscous fluid excluding a mass of the magnetic particles.

**7.** The magnetic viscous fluid according to any one of claims 1 to 6, further comprising a phenol-based compound and a sulfur-based compound.

**8.** The magnetic viscous fluid according to claim 7,
wherein the phenol-based compound is a hindered phenol-based compound.

**9.** The magnetic viscous fluid according to claim 7 or 8,
wherein the sulfur-based compound is a thioether-based compound.

**10.** The magnetic viscous fluid according to any one of claims 7 to 9,
wherein a total content of the phenol-based compound and the sulfur-based compound is 0.1% by mass or more and 3.0% by mass or less with respect to a mass of the magnetic viscous fluid excluding a mass of the magnetic particles.

**11.** The magnetic viscous fluid according to any one of claims 1 to 10, further comprising acrylic silicone.

**12.** The magnetic viscous fluid according to any one of claims 1 to 11,
wherein the carrier fluid is a silicone-based fluid.

**13.** The magnetic viscous fluid according to any one of claims 1 to 12,
wherein the shear viscosity of the magnetic viscous fluid is 50 mPa sec or more and 500 mPa sec or less.

**14.** The magnetic viscous fluid according to any one of claims 1 to 13, wherein the viscosity of the carrier fluid is 10 mPa·sec or more and 35 mPa·sec or less.

**15.** A magnetic viscous fluid device comprising: the magnetic viscous fluid according to any one of claims 1 to 14.

**16.** A production method for the magnetic viscous fluid according to any one of claims 1 to 14, the production method comprising: subjecting a mixture containing the magnetic particles, the carrier fluid, and the organic molybdenum compound to resonance acoustic mixing.

**INTERNATIONAL SEARCH REPORT**

International application No. **PCT/JP2021/031676**

**A. CLASSIFICATION OF SUBJECT MATTER**

***F16D 57/00***(2006.01)i; ***H01F 1/44***(2006.01)i
FI: H01F1/44 170; F16D57/00

According to International Patent Classification (IPC) or to both national classification and IPC

**B. FIELDS SEARCHED**

Minimum documentation searched (classification system followed by classification symbols)

F16D57/00; H01F1/44

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-92119 A (COSMO OIL LUBRICANTS CO., LTD.) 25 May 2017 (2017-05-25) | 1-16 |
| A | JP 2006-505957 A (LORD CORP.) 16 February 2006 (2006-02-16) | 1-16 |
| A | JP 10-233307 A (FERROFLUIDICS CORP.) 02 September 1998 (1998-09-02) | 1-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 October 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/031676**

| Patent document cited in search report | Publication date (day/month/year) | Patent family member(s) | Publication date (day/month/year) |
|---|---|---|---|
| JP 2017-92119 A | 25 May 2017 | (Family: none) | |
| JP 2006-505957 A | 16 February 2006 | US 2004/0084263 A1 | |
| | | US 2004/0084651 A1 | |
| | | WO 2004/044931 A2 | |
| | | EP 1559119 A | |
| | | KR 10-2005-0065633 A | |
| JP 10-233307 A | 02 September 1998 | US 5851416 A | |
| | | EP 859379 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019033222 A